(19) Europäisches Patentamt
European Patent Office
Office européen des brevets

(11) EP 4 742 501 A1

(12) EUROPEAN PATENT APPLICATION

(43) Date of publication:
13.05.2026 Bulletin 2026/20

(51) International Patent Classification (IPC):
H02K 1/16 (2006.01)     H02K 3/12 (2006.01)
H02K 3/34 (2006.01)     H02K 3/48 (2006.01)

(21) Application number: 24211945.1

(22) Date of filing: 10.11.2024

(52) Cooperative Patent Classification (CPC):
H02K 1/165; H02K 3/12; H02K 3/345; H02K 3/48;
H02K 2213/03

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Fukuta Electric & Machinery Co., Ltd.
Miaoli County 366003 (TW)

(72) Inventors:
• CHANG, Ching-Feng
  366003 Miaoli County (TW)

• CHU, Chih-Meng
  366003 Miaoli County (TW)
• WU, Zhi-Zheng
  366003 Miaoli County (TW)
• CHANG, Chen-Hui
  366003 Miaoli County (TW)

(74) Representative: Straus, Alexander
2K Patentanwälte - München
Bajuwarenring 14
82041 Oberhaching (DE)

Remarks:
Amended claims in accordance with Rule 137(2)
EPC.

(54) STATOR STRUCTURE WITH FLAT WIRE WINDINGS

(57) A stator structure with flat wire windings comprises a stator core, flat wire windings, and insulation sheets. The stator core includes an annular yoke and multiple arranged circumferentially along the yoke, with slots extending radially between adjacent pairs of teeth, and each pair of teeth having shoes extending circumferentially from the ends thereof to form a slot opening. The flat wire winding consists of a linear conductor with an inserted section positioned within the slot. The insulation sheet is installed in the slot to encase the arranged inserted sections, and the slot contains a pair of protruding blocks that extend in a direction perpendicular to the radial direction, thereby confining the inserted section between the protruding blocks and the slot bottom.

FIG.1

EP 4 742 501 A1

**Description**

## FIELD OF INVENTION

The present disclosure relates to a stator structure, and more particularly to a stator structure using flat wire windings.

## BACKGROUND OF THE INVENTION

The basic structure of a motor consists of a stator and a rotor, which convert electrical energy into rotational kinetic energy by electromagnetic induction principles to provide torque output. The interaction between the magnetic fields of the stator and the rotating element determines the output performance of the motor.

The stator core structure includes an annular yoke and multiple teeth arranged circumferentially along the yoke, with slots extending radially between adjacent pairs of teeth. The ends of each pair of teeth have shoes extending circumferentially to form a slot opening. The function of the shoes is to collect magnetic flux, the greater the circumferential extent of the shoes, the greater the magnetic flux that can be accommodated by the stator core. Consequently, the shoes that form the slot opening are typically narrow and flat in shape, making them relatively fragile in strength.

In the stator windings of three-phase induction motors, copper wires known as hairpin windings are commonly used to form the flat wire windings. Compared to the traditional windings with circular wire cross-sections, the flat wire (also called rectangular wire) windings not only increase the slot filling rate and allow higher current carrying capacity, but also provide better heat dissipation characteristics, which are beneficial for motor operation at high power density and high efficiency.

When assembling the hairpin windings, multiple flat copper wires are first sequentially bent into hairpin conductors. Then, according to the wiring layout, the multiple hairpin conductors are stacked along the radial direction of stator core and arranged in a ring shape along the circumferential direction of the stator core. The open ends of the conductors are then inserted axially into the slots of the stator core. Finally, the open ends of the hairpins are twisted, levelled, and welded processes to form the flat wire windings. After the formed hairpin conductors are inserted into the stator core, the conductors will still expand radially within the slots due to the material properties of copper combined with the geometric tolerances from the bending and twisting operations.

Furthermore, to ensure insulation within the stator core slots, after the flat wire windings are formed, varnish is injected into the slots to fill any gaps and prevent wire movement, thereby avoiding insulation deterioration from magnet wire wear. However, since varnish has the characteristic of volume expansion during curing, this can cause conductor displacement or deformation within the gaps, potentially causing the hairpin conductors near the inner diameter of the core to protrude from the slot openings. If the rotor is installed and operated under such conditions, it may contact the conductors, leading to stator damage and increased product defect rates.

## SUMMARY OF THE INVENTION

The present disclosure provides a stator structure with flat wire windings comprising a stator core, flat wire windings, and insulation sheets. The stator core includes an annular yoke with multiple teeth arranged circumferentially along the yoke. Pairs of adjacent teeth are extending radially, forming slots therebetween, with shoes extending circumferentially from the ends of each pair of teeth to form a slot opening. The flat wire windings consist of multiple linear conductors with inserted sections positioned within the slots. The insulation sheet encases the inserted sections arranged in sequence, and is installed in the slot between the inserted sections and the slot surfaces.

A pair of protruding blocks is provided inside the slot, and extends in a direction perpendicular to the radial direction, with the inserted sections confined between the protruding blocks and the slot bottom.

In a direction perpendicular to the radial direction, the width of the slot is Sw, the width of the slot opening is G1, the width of the inserted section is Lw, the thickness of the insulation sheet is It, and the distance between the pair of protruding blocks is G2. These parameters satisfy the following conditions:

$$G1 \leq G2 < Lw \text{ and } It + 0.2 \text{ mm} < 0.5 \times (Sw - G2) \leq It + 1 \text{ mm}.$$

In this structure, the pair of protruding blocks within the slot confine the multiple linear conductors (flat copper wires) within the slot. Therefore, when the flat copper wires experience deformation from external forces, their deformation is constrained between the protruding blocks and the slot bottom, thereby enhancing manufacturing yield.

Additionally, the following condition may also be satisfied: $0.1 \text{ mm} \leq It \leq 0.3 \text{ mm}$.

Furthermore, the insulation sheet comprises a main section and two overlap sections extending outwardly from opposite sides of the main section. The insulation sheet is bent to allow the two overlap sections to enclose the inserted sections arranged in sequence, with the overlap sections oriented toward the slot bottom.

Moreover, each protruding block has a tip and two angled surfaces extending from opposite sides of the tip. The slot has two slot walls extending from opposite sides of the slot bottom. In cross-section, extension lines of the two angled surfaces intersect with extension lines of their adjacent slot walls to define a first point and a second point, with the second point located between the first point and the shoe. The extension line of the slot wall intersects with a boundary of the inner circumferential surface of the stator core and defines a third point.

In cross-section, the inserted section has a thickness Lt parallel to the extension line of the slot wall. The distance from the first point to the second point is L3, and the distance from the second point to the third point is L4, satisfying the following condition: $Lt \leq L3 + L4$. This configuration ensures that even if the copper wires deform within the slot, they will not protrude from the slot opening.

Furthermore, the following condition may also be satisfied: $Lt \leq L4$.

## BRIEF DESCRIPTION OF THE DRAWINGS

FIG. 1 is an exploded view of the components of the stator structure.
FIG. 2 is a cross-sectional view of the stator structure.
FIG. 3 is a partially enlarged view of FIG. 2.
FIG. 4 is a schematic structure diagram of the stator slot.
FIG. 5 is a partially enlarged view of FIG. 2.
FIGS. 6A, 6B, 6C, and 6D are magnetic field distribution diagrams of stator slots with different structures.

## DETAILED DESCRIPTION OF THE PREFERRED EMBODIMENTS

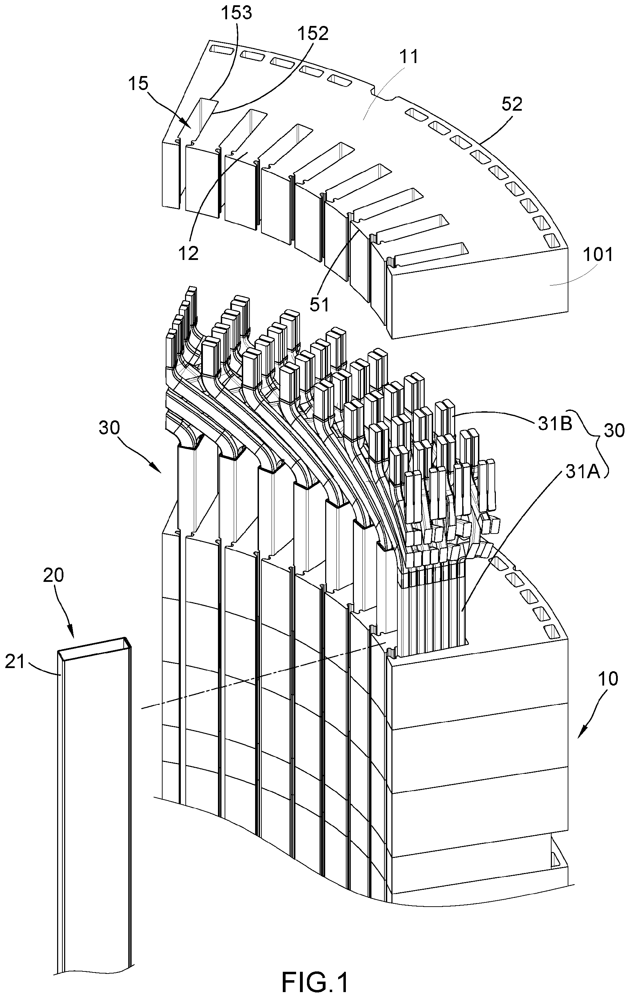

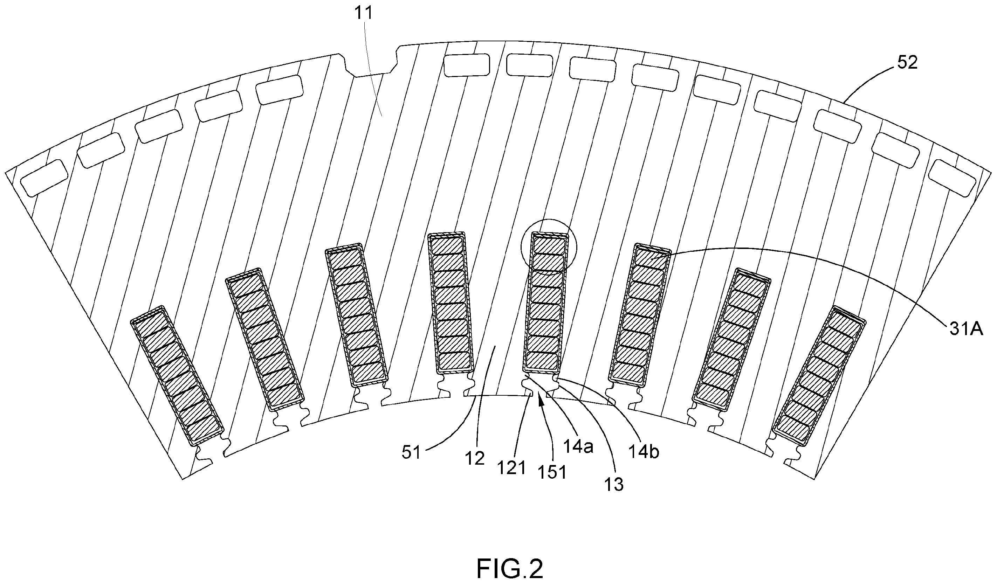

The motor structure of the present disclosure includes an inner rotor and an outer stator, wherein the stator structure is annular in its entirety. For clarity, only a portion of the stator structure is shown in this embodiment. Referring to FIGS. 1 and 2, which show a portion of the stator structure comprising a stator core 10, insulation sheets 20, and flat wire windings 30.

The stator core 10 is formed by axially stacking multiple core units 101, each of which includes an annular yoke 11 with multiple teeth 12 arranged circumferentially along the yoke 11. Slots 15 extend radially between adjacent pairs of teeth 12, with shoes 121 extending circumferentially from the ends of each pair of teeth 12. The tips 121t of the shoes 121 are radially symmetrical and form a slot opening 151. Each slot 15 has a slot bottom 153 near the yoke 11 and two slot walls 152 extending from opposite sides of the slot bottom 153. A portion of the surface of the shoes 121 faces the inner rotor, forming an inner circumferential surface 51 of the core unit 101, while an outer circumferential surface 52 is positioned relatively far from the teeth 12.

The flat wire windings 30 comprise multiple linear conductors 31, which may have identical or different shapes. In this description, hairpin windings are used as an example of the linear conductors 31. Each linear conductor 31 includes a bent section (not shown) and two inserted sections 31A extending from opposite ends of the bent section, with each inserted section 31A terminating in a terminal end 31B.

During installation, the linear conductors 31 are first folded into U-shapes (forming the inserted sections 31A and the bent sections), and the two inserted sections 31A are inserted along the axial direction of stator core into different slots 15. All bent sections of the linear conductors 31 are positioned at one end of the stator core 10, while the ends of the inserted sections 31A are positioned at the opposite end. The ends of all inserted sections 31A undergo twisting and leveling processes, and the wire ends of the inserted sections 31A are exposed to form the terminal ends 31B, which are welded according to the wiring layout to form complete circuits.

In this embodiment, the portion of the linear conductor 31 within the slot 15 is defined as the inserted section 31A. During installation, deformation of the inserted sections 31A due to external forces may result in increased defect rates. Additionally, even if the linear conductor 31 is not U-shaped, such as in cases of an I-pin, S-winding, or X-pin as defined in existing technology, as long as these conductors have inserted sections 31A within the slots 15, they fall within the scope of the linear conductors 31 as defined in this embodiment.

The insulation sheet 20 is installed in the slot 15 between the inserted sections 31A and the inner surface of the slot 15 (i.e. the slot walls 152 and the slot bottom 153). The insulation sheet 20 is configured to encase the multiple inserted sections 31A arranged in the slot 15, ensuring electrical insulation between the linear conductors 31 and the slot 15.

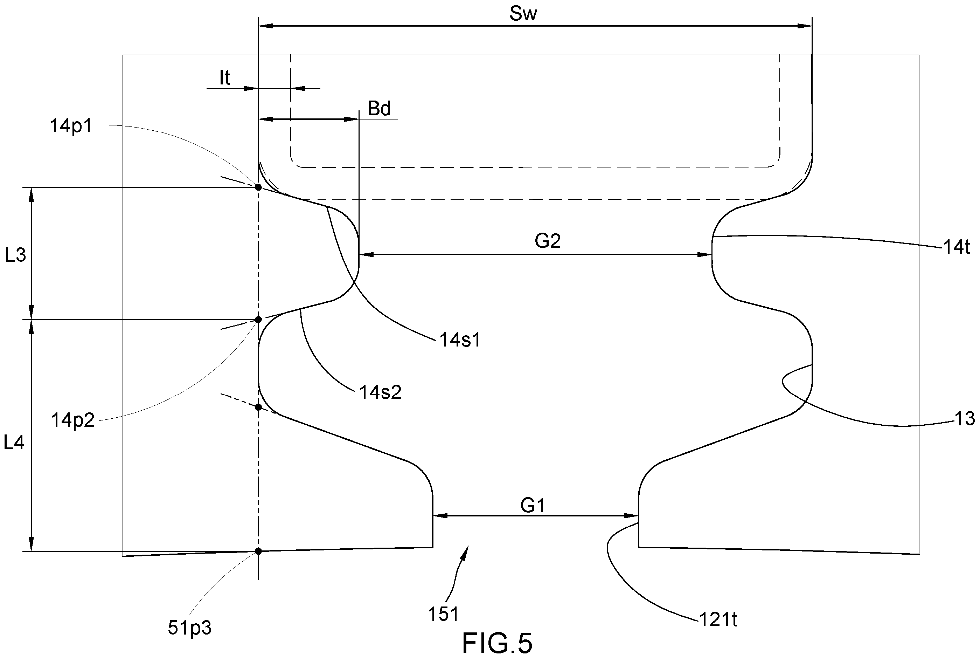

Referring to FIGS. 2, 4, and 5, which show the cross-sectional profile of the slot 15 perpendicular to the axial direction of the stator core 10. A pair of protruding blocks 14a and 14b extend from the inner surface of the slot 15, with their protruding direction perpendicular to the slot extension direction Db. When the flat wire windings 30 are installed, the inserted sections 31A are confined between the protruding blocks 14a, 14b and the slot bottom 153.

The width direction Da of the slot 15 is perpendicular to the radial direction of the stator core 10. In the width direction Da, the width of the slot 15 is Sw, the width of the slot 15 opening is G1, the width of the inserted section 31A is Lw, the thickness of the insulation sheet 20 is It, and the distance between the pair of protruding blocks 14a, 14b is G2. These parameters satisfy the following conditions:

$$G1 \leq G2 < Lw,$$

and

$$It + 0.2 \text{ mm} < 0.5 \times (Sw - G2) \leq It + 1 \text{ mm}.$$

Here, $0.5 \times (Sw - G2)$ represents the protrusion distance Bd of one protruding block 14a (or 14b) toward the interior of the slot 15 relative to the slot wall 152, with the protruding blocks 14a and 14b symmetrically arranged on opposite side of the slot walls 152. Under these conditions, the protrusion distance Bd of the protruding block 14a toward the interior of the slot 15 is approximately 0.3 to 1 times the protrusion distance of the shoe 121 toward the slot 15.

The pair of protruding blocks 14a and 14b confines the multiple linear conductors within the slot, and when the inserted sections 31A deform under external forces, their deformation is constrained between the protruding blocks and the slot bottom. Even during the curing of the varnish in the varnish filling area 60 within the slot 15, excessive deformation is still prevented, thereby enhancing the manufacturing yield.

Furthermore, the following condition may also be satisfied: $0.1 \text{ mm} \leq It \leq 0.3 \text{ mm}$.

Additionally, the following condition may further be satisfied: $It + 0.2 \text{ mm} < Bd \leq It + 0.6 \text{ mm}$. Under this condition, the protrusion distance Bd of the protruding block 14a toward the interior of the slot 15 is approximately 0.4 to 0.6 times the protrusion distance of the shoe 121 toward the slot 15.

In this embodiment, the width Sw of the slot 15 satisfies: $3 \text{ mm} \leq Sw \leq 5 \text{ mm}$. The width Lw of the inserted section 31A satisfies: $2.5 \text{ mm} \leq Lw \leq 4.5 \text{ mm}$.

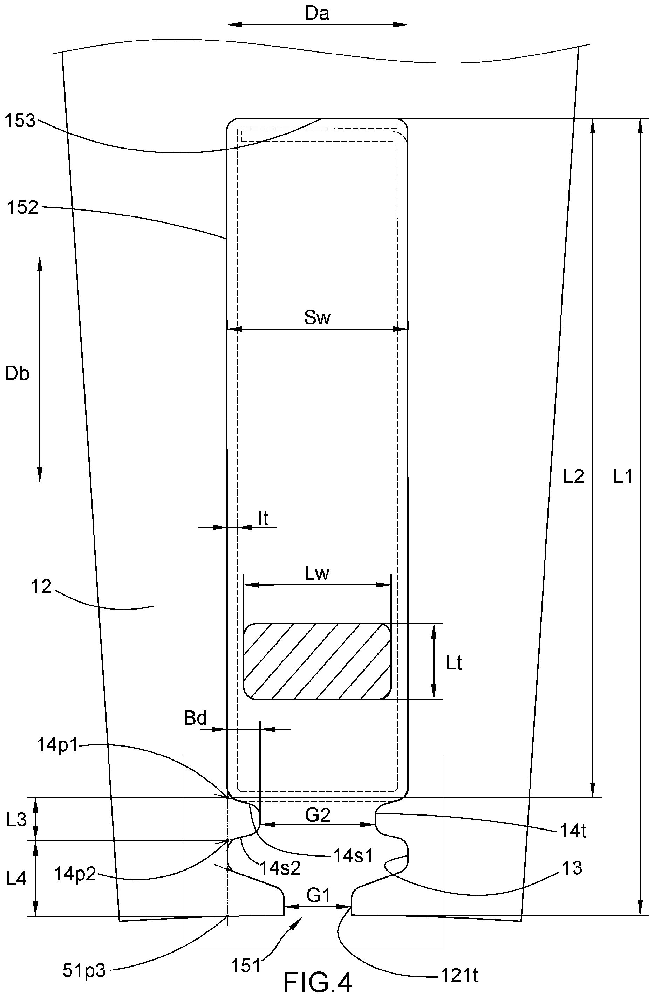

Considering the stamping process of the stator core 10, in the cross-section shown in FIG. 4, the protruding block 14a has a tip 14t and two angled surfaces 14s 1 and 14s2 extending from opposite sides of the tip 14t. The tips of the two protruding blocks 14a and 14b are aligned with each other, and the distance between them is defined as the width G2.

In this embodiment, the centerline of the slot 15 aligns with the radial direction of the stator core 10, thereby defining a slot extension direction Db. In cross-section, the slot walls 152 are parallel to the slot extension direction Db. The extension line of each angled surface 14s 1 (or 14s2) of each protruding block 14a (or 14b) intersect with the extension line of the adjacent slot wall 152, defining a first point 14p1 and a second point 14p2. The second point 14p2 is positioned between the first point 14p1 and shoe 121. The intersection of the slot wall 152 extension line with the boundary of the inner circumferential surface 51 of the stator core 10 is defined as a third point 51p3.

In this cross-section, the inserted section 31A has a thickness, Lt, oriented parallel to the slot extension direction Db. The distance from the slot bottom 153 to the third point 51p3 is defined as L1; the distance from the slot bottom 153 to the first point 14p1 as L2; the distance from the first point 14p1 to the second point 14p2 as L3; and the distance from the second point 14p2 to the third point 51p3 as L4. These distances meet the following relationship:

$$L1 = L2 + L3 + L4.$$

For purposes of this embodiment, it is recommended that the following condition be satisfied:

$$Lt \leq L3 + L4.$$

This means that the protruding blocks 14a and 14b confine the inserted sections 31A within the slot 15 at a distance of one inserted section 31A thickness Lt from the slot opening 151. Thus, even if the copper wires deform within the slot 15, they will not protrude from the slot opening 151.

Furthermore, the following condition may also be satisfied: $Lt \leq L4$.

In this embodiment, the thickness Lt of the inserted section 31A satisfies:

$$1.5 \text{ mm} \leq Lt \leq 3 \text{ mm}.$$

In this embodiment, the junction between the shoe 121 and the protruding block 14a (or 14b) forms a flat section 13 that, in cross-section, aligns with the extension line of the slot wall 152.

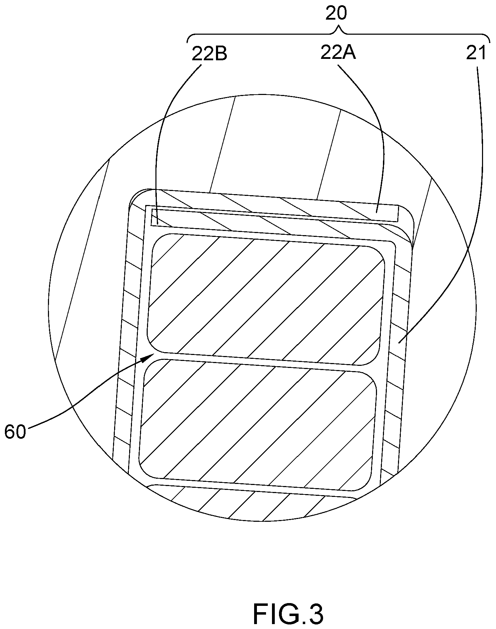

Referring to FIGS. 2 and 3, the insulation sheet 20 in this embodiment consists of a main section 21 and two overlap sections 22A and 22B extending outwardly from opposite sides of the main section 21. When the insulation sheet 20 is placed in the slot 15, it is bent to allow the overlap sections 22A and 22B to enclose the inserted sections 31A arranged in sequence. In this embodiment, the overlap sections 22A and 22B are oriented toward the slot bottom 153, enclosing the inserted sections 31A near the outer circumferential surface 52, while a bending portion of the main section 21 is positioned between the protruding blocks 14a and 14b, enclosing the inserted sections 31A near the inner bore surface 51.

During the stator assembly, the overlap sections 22A and 22B of the insulation sheet 20 overlap without bonding. When facing an open space in the slot 15, these overlap sections 22A and 22B may be pushed by the inserted sections 31A encased by the insulation sheet 20 or may expand due to varnish curing. Positioning the overlap sections 22A and 22B toward the slot bottom 153, with the main section 21 of the insulation sheet 20 positioned between the inserted sections 31A and the protruding blocks 14a and 14b, can prevent these issues. At the same time, this installation method of the insulation sheet 20 and its arrangement with the protruding blocks 14a and 14b also helps to control the deformation of the inserted sections 31A.

In a specific embodiment, the slot 15 accommodates eight inserted sections 31A, with G1 = 1.6 mm, G2 = 2.74 mm, Lw = 3.51 mm, Sw = 4.3 mm, It = 0.25 mm, Bd = 0.78 mm, Lt = 1.8 mm, L2 = 16.27 mm, L3 = 0.91 mm, and L4 = 1.85 mm.

In another specific embodiment, the slot 15 accommodates six inserted sections 31A, with G1 = 1.6 mm, G2 = 3.1 mm, Lw = 3.43 mm, Sw = 4.5 mm, It = 0.2 mm, Bd = 0.7 mm, Lt = 2.38 mm, L2 = 16.78 mm, L3 = 0.92 mm, and L4 = 1.8 mm.

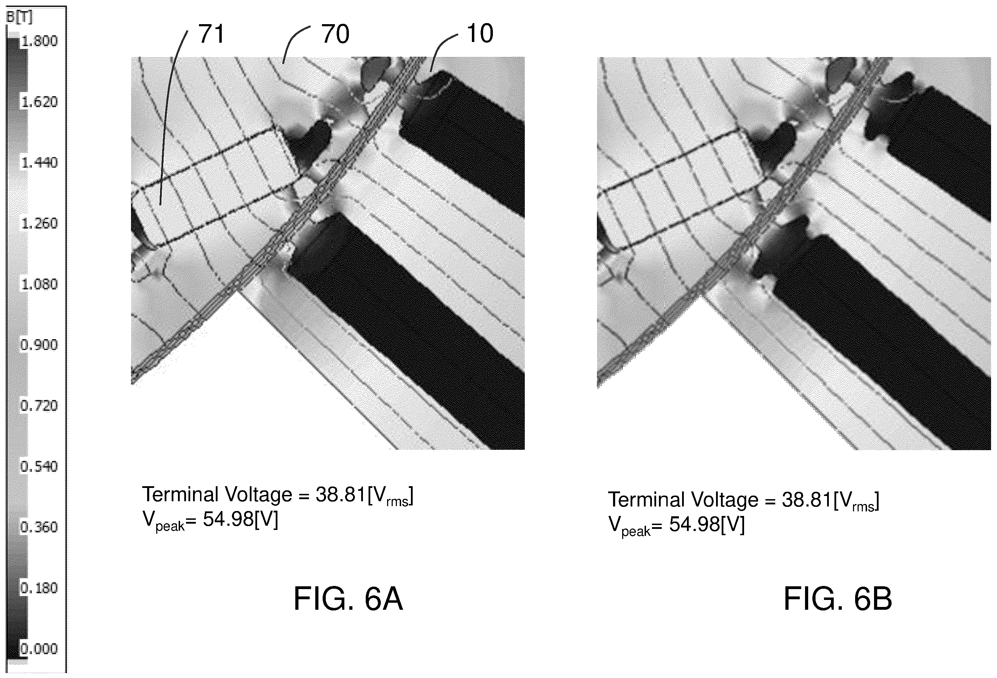

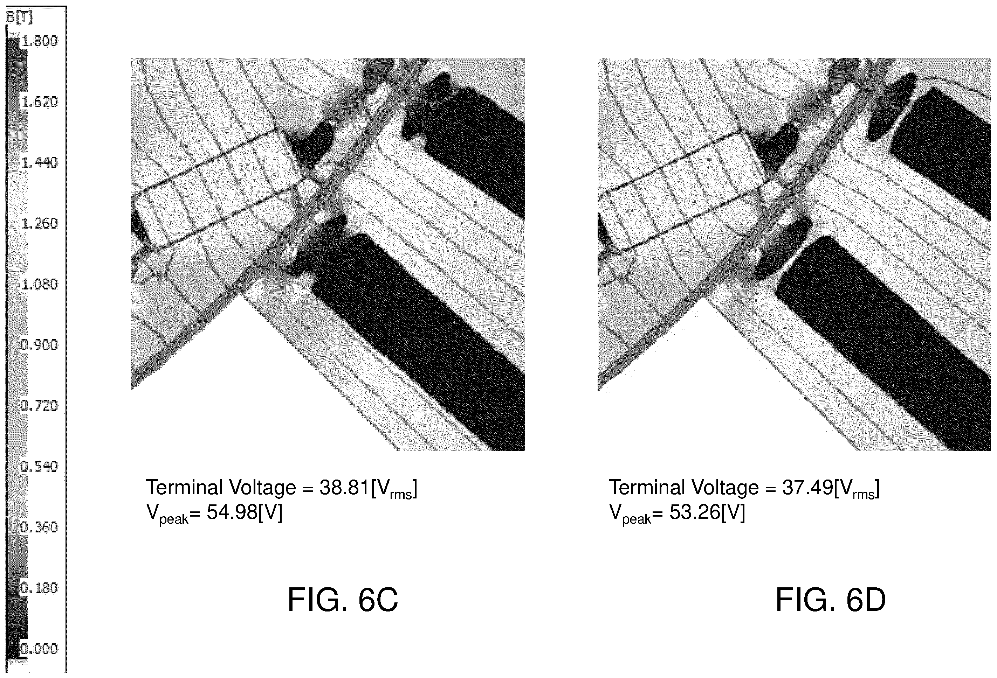

Referring to FIGS. 6A, 6B, 6C, and 6D, these figures simulate the magnetic field distribution during the operation of the stator and rotor 70, with the stator core 10 representing the position of the stator. FIG. 6A shows the stator core 10 without the protruding blocks. FIG. 6B shows the stator core 10 with the protruding blocks, where the protrusion distance toward the interior of the slot 15 is approximately 0.5 times the protrusion distance of the shoes toward the slot. FIG. 6C shows the stator core 10 with the protruding blocks, where the protrusion distance of the protruding blocks toward the interior of the slot 15 is approximately 1 times the protrusion distance of the shoes toward the slot. In FIG. 6C, the tips of the two protruding blocks are connected, i.e. G2 = 0.

As discussed above, this embodiment demonstrates that the inclusion of the protruding blocks in the stator core 10, within the specified ranges, does not affect the operation of the motor structure and can enhance manufacturing yield.

**Claims**

1. A stator structure with flat wire windings, comprising:

   a stator core (10) including an yoke (11) in an annular form and multiple teeth (12) arranged circumferentially along the yoke (11), with slots (15) extending radially between adjacent pairs of teeth (12), each pair of teeth (12) having shoes (121) extending circumferentially from the ends thereof to form a slot opening (151);
   flat wire windings (30) comprising multiple linear conductors (31) with inserted sections (31A) positioned within the slots (15); and
   insulation sheets (20) encasing the inserted sections (31A) arranged in sequence, and being installed in the slots (15) between the inserted sections (31A) and surfaces of the slots (15); **characterized in that**,
   a pair of protruding blocks (14a, 14b) is provided inside each of the slots (15), extending in a direction perpendicular to the radial direction, with the inserted sections (31A) confined between the pair of protruding blocks (14a,14b) and a slot bottom (153) of each of the slots (15);
   wherein, in the direction perpendicular to the radial direction (Da), a width of the slot is Sw, a width of the slot opening (151) is G1, a width of the inserted section is Lw, a thickness of the insulation sheet is It, and a distance between the pair of protruding blocks (14a, 14b) is G2, satisfying the following conditions:

$$G1 \leq G2 < Lw,$$

   and

$$It + 0.2 \text{ mm} < 0.5 \times (Sw - G2) \leq It + 1 \text{ mm}.$$

2. The stator structure with flat wire windings according to Claim 1, wherein the following condition is satisfied: $0.1\text{mm} \leq It \leq 0.3\text{mm}$.

3. The stator structure with flat wire windings according to Claims 1 or 2, wherein the following condition is satisfied: It +

$0.2 \text{ mm} < 0.5 \times (Sw-G2) \leq It + 0.6 \text{ mm}$.

4. The stator structure with flat wire windings according to any one of above Claims, wherein a junction between each of the shoes (121) and each of the protruding blocks (14a,14b) forms a flat section (13).

5. The stator structure with flat wire windings according to any one of above Claims, wherein each of the insulation sheets (20) comprises a main section (21) and two overlap sections (22A,22B) extending outwardly from opposite sides of the main section (21), with each of the insulation sheets (20) bent such that the two overlap sections (22A,22B) enclose the inserted sections (31A) arranged in sequence and are oriented toward the slot bottom (153).

6. The stator structure with flat wire windings according to any one of above Claims, wherein each of the protruding blocks (14a,14b) has a tip (14) and two angled surfaces (14s1,14s2) extending from opposite sides of the tip (14), and each of the slots (15) has two slot walls (152) extending from opposite sides of the slot bottom (153);

   wherein, in a cross-section, extension lines of the two angled surfaces (14s1,14s2) intersect with extension lines of their adjacent slot walls (152) to define a first point (14p1) and a second point (14p2), with the second point (14p2) positioned between the first point (14p1) and each of the shoes (121), and the extension line of each of the slot walls (152) intersect with a boundary of an inner circumferential surface (51) of the stator core (10) and defines a third point (51p3), and
   wherein, in the cross-section, each of the inserted sections (31A) has a thickness Lt parallel to the extension line of each of slot walls (152), the distance from the first point (14p1) to the second point (14p2) is L3, and the distance from the second point (14p2) to the third point (51p3) is L4, satisfying the condition:

   $$Lt \leq L3 + L4.$$

7. The stator structure with flat wire windings according to Claim 6, wherein the following condition is satisfied: $Lt \leq L4$.

8. The stator structure with flat wire windings according to any one of above Claims, wherein varnish is filled between the insulation sheets (20) and the inserted sections (31A).

**Amended claims in accordance with Rule 137(2) EPC.**

1. A stator structure with flat wire windings, comprising:

   a stator core (10) including an yoke (11) in an annular form and multiple teeth (12) arranged circumferentially along the yoke (11), with slots (15) extending radially between adjacent pairs of teeth (12), each pair of teeth (12) having shoes (121) extending circumferentially from the ends thereof to form a slot opening (151);
   flat wire windings (30) comprising multiple conductors (31) with inserted linear-shaped sections (31A) positioned within the slots (15); and
   insulation sheets (20) encasing the inserted sections (31A) arranged in sequence, and being installed in the slots (15) between the inserted sections (31A) and surfaces of the slots (15); **characterized in that**,
   a pair of protruding blocks (14a,14b) is provided inside each of the slots (15), extending in a direction perpendicular to the radial direction, with the inserted sections (31A) confined between the pair of protruding blocks (14a,14b) and a slot bottom (153) of each of the slots (15);
   wherein, in the direction perpendicular to the radial direction (Da), a width of the slot is Sw, a width of the slot opening (151) is G1, a width of the inserted section is Lw, a thickness of the insulation sheet is It, and a distance between the pair of protruding blocks (14a, 14b) is G2, satisfying the following conditions:

   $$G1 < G2 < Lw,$$

   and

   $$It + 0.2 \text{ mm} < 0.5 \times (Sw - G2) \leq It + 1 \text{ mm}$$

   Wherein, each of the protruding blocks (14a,14b) has a tip (14) and two angled surfaces (14s1,14s2) extending from opposite sides of the tip (14), and each of the slots (15) has two slot walls (152) extending from opposite sides of the slot bottom (153);

wherein, in a cross-section, extension lines of the two angled surfaces (14s 1, 14s2) intersect with extension lines of their adjacent slot walls (152) to define a first point (14p1) and a second point (14p2), with the second point (14p2) positioned between the first point (14p1) and each of the shoes (121), and the extension line of each of the slot walls (152) intersect with a boundary of an inner circumferential surface (51) of the stator core (10) and defines a third point (51p3), and

wherein, in the cross-section, each of the inserted sections (31A) has a thickness Lt parallel to the extension line of each of slot walls (152), the distance from the first point (14p1) to the second point (14p2) is L3, and the distance from the second point (14p2) to the third point (51p3) is L4, satisfying the condition: Lt $\leq$ L4;

wherein a junction between each of the shoes (121) and each of the protruding blocks (14a,14b) forms a flat section (13), that in cross-section, aligns with the extension line of the slot wall (152).

2. The stator structure with flat wire windings according to Claim 1, wherein the following condition is satisfied: 0.1mm $\leq$ lt $\leq$ 0.3mm.

3. The stator structure with flat wire windings according to Claims 1 or 2, wherein the following condition is satisfied: lt + 0.2 mm < 0.5 $\times$ (Sw-G2) $\leq$ lt + 0.6 mm.

4. The stator structure with flat wire windings according to any one of above Claims, wherein each of the insulation sheets (20) comprises a main section (21) and two overlap sections (22A,22B) extending outwardly from opposite sides of the main section (21), with each of the insulation sheets (20) bent such that the two overlap sections (22A,22B) enclose the inserted sections (31A) arranged in sequence and are oriented toward the slot bottom (153).

5. The stator structure with flat wire windings according to any one of above Claims, wherein varnish is filled between the insulation sheets (20) and the inserted sections (31A).

FIG.1

FIG.2

EP 4 742 501 A1

FIG.3

FIG.4

FIG.5

Terminal Voltage = 38.81[V$_{rms}$]
V$_{peak}$= 54.98[V]

FIG. 6A

Terminal Voltage = 38.81[V$_{rms}$]
V$_{peak}$= 54.98[V]

FIG. 6B

EP 4 742 501 A1

Terminal Voltage = 37.49[$V_{rms}$]
$V_{peak}$= 53.26[V]

FIG. 6D

Terminal Voltage = 38.81[$V_{rms}$]
$V_{peak}$= 54.98[V]

FIG. 6C

B[T]

1.800
1.620
1.440
1.260
1.080
0.900
0.720
0.540
0.360
0.180
0.000

# EUROPEAN SEARCH REPORT

**Application Number**

EP 24 21 1945

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 6 658492 B2 (TOYOTA MOTOR CORP) 4 March 2020 (2020-03-04) * paragraph [0017] – paragraph [0018] * * paragraph [0022] * * figures 1,3,6 * ----- | 1-8 | INV. H02K1/16 H02K3/12 H02K3/34 H02K3/48 |
| Y | CN 211 880 188 U (ZHEJIANG LOONGSON ELECTRIC DRIVE TECH CO LTD) 6 November 2020 (2020-11-06) * paragraph [0025] * * figure 1 * ----- | 1-8 | |

**TECHNICAL FIELDS SEARCHED (IPC)**

H02K

The present search report has been drawn up for all claims

| Place of search | Date of completion of the search | Examiner |
|---|---|---|
| The Hague | 12 February 2025 | Carlier, Hugo |

**EP 4 742 501 A1**

## ANNEX TO THE EUROPEAN SEARCH REPORT
## ON EUROPEAN PATENT APPLICATION NO.

EP 24 21 1945

12-02-2025

| Patent document cited in search report | | Publication date | Patent family member(s) | | Publication date |
|---|---|---|---|---|---|
| JP 6658492 | B2 | 04-03-2020 | JP | 6658492 B2 | 04-03-2020 |
| | | | JP | 2018102027 A | 28-06-2018 |
| CN 211880188 | U | 06-11-2020 | NONE | | |